# EUROPÄISCHE PATENTSCHRIFT

(11) **EP 0 938 874 B1**
(45) Veröffentlichungstag und Bekanntmachung des Hinweises auf die Patenterteilung: **17.11.2004**
(21) Anmeldenummer: 99100649.5
(22) Anmeldetag: 14.01.1999
(51) Int. Cl.: A61C 7/14, A61C 7/30, A61C 7/28

(54) **Kieferorthopädisches Bracket**
Orthodontic bracket
Bracket orthodontique

(30) Priorität: 26.02.1998 US 31248
(43) Veröffentlichungstag der Anmeldung: 01.09.1999
(73) Patentinhaber: Heiser, Wolfgang, Dr. med., 6020 Innsbruck (AT)
(72) Erfinder: Heiser, Wolfgang, Dr. med., 6020 Innsbruck (AT)
(74) Vertreter: Körner, Ekkehard, Dipl.-Ing.

(56) Entgegenhaltungen:
- GB-A- 430 558
- US-A- 3 076 265
- US-A- 4 192 070
- US-A- 5 466 151
- US-A- 5 630 715
- US-A- 5 711 666
- PATENT ABSTRACTS OF JAPAN vol. 016, no. 490 (C-0994), 12. Oktober 1992 (1992-10-12) -& JP 04 180750 A (YONEO SUGANO), 26. Juni 1992 (1992-06-26)

## Beschreibung

### GEBIET DER ERFINDUNG

Die Erfindung bezieht sich auf ein Bracket für kieferorthopädische Behandlungen, mit einer Grundplatte zur Befestigung an der Krone eines Zahns und einem auf der Grundplatte befestigten, sich über die Grundplatte erhebenden Aufbau, der wenigstens einen Schlitz zur Aufnahme eines Richtdrahtes aufweist.

### STAND DER TECHNIK

Brackets der vorgenannten Art sind allgemein bekannt und beispielsweise in US-A- 5 562 444, US-A- 5 074 783, US-A- 5 022 854 und US-A- 4 415 330 beschrieben.

Zur kieferorthopädischen Behandlung eines Patienten werden die Brackets eines vollständigen Bracket-Satzes in vorbestimmten Stellungen an den Kronen der Zähne des Patienten befestigt, beispielsweise mit Hilfe eines Zements oder Klebers, und anschliessend wird in die Schlitze in den Aufbauten der Brackets eines Kiefers ein gemeinsamer, bogenförmig verlaufender Richtdraht eingelegt, so daß die Brackets an dem Richtdraht wie Perlen auf einer Schnur aufgereiht sind, siehe beispielsweise Fig. 1 in US-A- 4 283 908. Mit Hilfe von Ligaturen oder durch Schließfedern wird der Richtdraht in den Schlitzen der Brackets gesichert, siehe beispielsweise US-A- 5 562 444 und US-A- 5 630 715.

Die Brackets werden auf den Kronen der Zähne derart montiert, daß sie jeweils eine vorbestimmte Ausrichtung in Bezug auf den Zahn haben, siehe beispielsweise US-A- 5 022 854, gemäß dem gedachte Verlängerungslinien der Seitenkanten der speziell geformten Grundplatte des Bracket sich in der Wurzelspitze des betreffenden Zahns schneiden. Je nach zu behebender Fehlstellung der Zähne des Patienten hat dann der in die Bracketschlitze eingelegte Richtdraht zu Beginn der kieferorthopädischen Behandlung einen unregelmäßigen, mehr oder weniger welligen oder winkeligen Verlauf.

Durch die Elastizität des Richtdrahtes wird auf die Brackets und über diese schließlich auf die Zähne vom Richtdraht jeweils ein Drehmoment aufgebracht, das aufgrund der Dauerhaftigkeit seiner Einwirkung schließlich dazu führt, daß die Zähne dem Drehmoment nachgeben und sich allmählich in eine vom Kieferorthopäden bestimmte Sollstellung bewegen, so daß am Ende der kieferorthopädischen Behandlung der die Brackets verbindende Richtdraht im wesentlichen geradlinig verläuft, von seinem dem Kieferbogen folgenden Bogen einmal abgesehen.

Bei sehr großer Fehlstellung der Zähne genügt zu Anfang der Behandlung ein verhältnismäßig dünner Richtdraht, um an den Zähnen die notwendigen Drehmomente hervorzurufen. Ein zu dicker Richtdraht würde ein zu großes Drehmoment erzeugen. Je mehr die Zahnstellung der Sollstellung gleicht, um so dicker muß jedoch der Richtdraht sein, um das zum Bewegen der Zähne notwendige Drehmoment aufzubringen. Während einer kieferorthopädischen Behandlung werden daher die Richtdrähte mehrmals gewechselt, nicht jedoch die Brackets. Letztere sind so dimensioniert, daß auch der dickste in Frage kommende Richtdraht noch von ihnen aufgenommen werden kann.

Der Bewegungs- oder Fehlstellungsspielraum, der pro Richtdraht mit einer kieferorthopädischen Behandlung dieser Art erfaßt werden kann, beträgt etwa 15° Drehwinkel am Zahn. Allerdings hat ein dünner Richtdraht, wie er zu Beginn der Behandlung verwendet wird, in dem Schlitz jedes Bracket einen Bewegungsspielraum von etwa 8°, so daß unter Umständen nurmehr 7° wirksamer Drehwinkel pro Zahn verbleibt, um den der Zahn mit dem genannten dünnen Richtdraht gedreht werden kann. Man hat dieses bislang in Kauf genommen und durch frühzeitigen Austausch des dünnen Richtdrahtes gegen einen dickeren Richtdraht kompensiert.

Das häufige Wechseln der Richtdrähte ist für den Patienten lästig und zeitaufwendig und wegen der ärztlichen Inanspruchnahme auch teuer.

Das in der schon erwähnten US-A- 5 630 715 beschriebene Bracket verwendet in einer seiner Ausführungsformen eine Schließfeder, die so gestaltet ist, daß sie in ihrer Schließstellung eine in Richtung der Seitenwände des Schlitzes zielende Kraft auf den Richtdraht ausübt, um diesen gegen die betreffende Seitenwand zu drücken. Aufgrund der gewählten Federkonstruktion kann sich diese Kraftwirkung aber nur bei einem Richtdraht entwickeln, der einen so großen Querschnitt hat, daß sich die Feder an ihn anlegen kann. An Richtdrähten kleiner Querschnitte, wie sie zu Beginn der kieferorthopädischen Behandlung verwendet werden, hat die Feder keine seitlich drückende Wirkung, weil sie von ihr nicht berührt werden.

Aus der US-A- 3 076 265 ist ein kieferorthopädisches Bracket bekannt, das von einem Federblech gebildet ist, das dreifach jeweils rechtwinkelig zu einem beidseits offenen Kanal rechteckigen Querschnitts gebogen ist. Einer der Schenkel, die den Kanal begrenzen, ist dazu vorgesehen, als Grundplatte mit seiner Rückseite auf einen Zahn geklebt zu werden. Der gegenüberliegende Schenkel ist als Federzunge ausgebildet, deren freies Ende dazu bestimmt ist, unter einer Nase an einem der vom Gruridplattenschenkel abstehenden Schenkel verrastet zu werden. Der dem letztgenannten Schenkel gegenüberliegende Schenkel des Blechs bildet zusammen mit dem Grundplattenschenkel und der Federzunge eine Tasche aus, in die ein Richtdraht eingelegt werden kann. Die Federzunge weist einen in den Kanal hineinragenden Vorsprung auf, um die Höhe der genannten Tasche und dadurch den Bewegungsspielraum eines darin eingelegten Richtdrahtes zu begrenzen. Zwischen den die Nase tragenden Schenkel und den Richtdraht kann ein U-förmiger Drahtfederbügel eingesetzt werden, der den Richtdraht auf den Boden der Tasche drückt. Dieser Federbügel ist ein gesondertes, loses Bauelement, das fallweise verwendet werden kann und an dem Bracket lediglich federnd verrastet ist und daher.leicht verloren gehen kann.

### ÜBERSICHT ÜBER DIE ERFINDUNG

Der Erfindung liegt daher die Aufgabe zugrunde, ein Bracket der eingangs genannten Art anzugeben, mit dem der Behandlungserfolg verbessert und die Anzahl der Richtdrahtwechsel verringert werden kann.

Diese Aufgabe wird durch die im Anspruch 1 angegebenen Merkmale gelöst. Vorteilhafte Ausgestaltungen der Erfindung sind Gegenstand der Unteransprüche.

Die Erfindung gibt ein Bracket an, das eine fest eingebaute Druckfeder enthält, die zwischen zwei Endstellungen verstellbar und in der Lage ist, einen in den Schlitz eingelegten Richtdraht quer zu dessen Achse und im wesentlichen parallel zur Grundplatte des Bracket in definierte Anlage an die eine Seitenwand des Schlitzes zu drücken. Hierdurch wird das Spiel in Querrichtung, das ein Richtdraht hat, der kleinere Querschnittsabmessungen als der Bracketschlitz aufweist, kompensiert oder aufgenommen.

Ein vergleichsweise dünner Richtdraht ist daher über eine im Vergleich zum Stand der Technik verlängerte Zeitdauer in der Lage, an den Brackets jeweils ein Drehmoment hervorzurufen, das sich auf die Zähne überträgt und zu einer gewollten Bewegung der Zähne in Richtung auf eine Sollstellung führt. Die Anzahl der Richtdrahtauswechselungen kann somit im Vergleich zum Stand der Technik vermindert werden.

Die Erfindung ist bei allen Brackets anwendbar, gleichgültig mit welchen Mitteln der Richtdraht in dem Schlitz gegen ein Herausgleiten gesichert ist. Solche Mittel können beispielsweise Ligaturen sein, die um den Bracketaufbau geschlungen sind und über den Richtdraht hinweg verlaufen, oder Schließfedern sein, die von oben auf den Richtdraht drücken. "Oben" bezeichnet hier die entgegengesetzt zur Grundplatte gelegene Seite des Bracket.

Durch eine Weiterbildung der Erfindung wird es sogar möglich, auf gesonderte Schließfedern oder Ligaturen der vorgenannten Art zur Sicherung des Richtdrahtes im Schlitz des Bracket ganz zu verzichten, wenn gemäß dieser Weiterbildung die Seitenwand des Schlitzes, gegen die der Richtdraht durch die Druckfeder gedrückt wird, hinterschnitten ist. Die Hinterschneidung ist nach oben von einem Vorsprung begrenzt, unter den der Richtdraht von der Druckfeder gedrückt wird und der somit im Zusammenwirken mit der Feder ein Herausgleiten des Richtdrahtes aus dem Schlitz verhindert.

Gemäß der Erfindung ist die Druckfeder, die von der Seite gegen den Richtdraht drücken soll, eine Blattfeder, die zwei Enden aufweist und an zwei in Längsrichtung des Richtdrahtes beabstandeten Stellen am Aufbau des Brackets so eingespannt ist, daß sie gewölbt ist und von der Seite her durch einen Durchbruch in dem Aufbau in den Schlitz zur Aufnahme des Richtdrahtes hinein soweit vorsteht, daß sie sich seitlich unter Druck an einen in dem Schlitz befindlichen Richtdraht anlegen kann.

Der Bracketaufbau ist in diesem Falle vorteilhafterweise derart gestaltet, daß die Druckfeder aus der erläuterten Stellung, die hier als erste stabile Stellung bezeichnet werden soll, mit Hilfe eines einfachen, dornförmigen Werkzeugs in eine dazu spiegelbildliche zweite stabile Stellung gebracht werden kann, in der sie den Schlitz vollständig freigibt.

In einer besonderen Ausführungsform der Erfindung, bei der für das Sichern des Richtdrahtes im Bracketschlitz ein Schieber verwendet ist, der am Aufbau des Brackets gleitend gehalten ist und über den Schlitz geschoben und von diesem weggeschoben werden kann, ist die genannte gewölbte Blattfeder mit dem Schieber mechanisch gekuppelt. Beim Verschieben des Schiebers in die den Schlitz überdeckende Schließrichtung wird somit die Blattfeder über ihren instabilen Gleichgewichtspunkt hinweg in die gegen den Richtdraht drückende erste stabile Stellung gebracht wird, in der sie zugleich den Schieber in seiner Schließstellung sichert. Andererseits sichert in der entgegengesetzten, spiegelbildlich gebogenen zweiten Stellung die Blattfeder den Schieber in seiner Öffnungsstellung, so daß der Kieferorthopäde bequem den Richtdraht in den offenen Bracketschlitz einlegen oder aus ihm entnehmen kann, ohne befürchten zu müssen, daß sich der Schieber unbeabsichtigt bewegt.

Die Erfindung ist auf sehr einfache Weise realisierbar. Es brauchen bei Verwendung einer Blattfeder als Druckfeder lediglich zwei Lager für die Plattfeder am Bracketaufbau ausgebildet zu werden, zwischen die die Blattfeder eingespannt wird.

Die Erfindung ermöglicht es dem Kieferorthopäden auch, das von dem Richtdraht an einzelnen Zähnen hervorgerufene Drehmoment individuell, d.h. für jeden Zahn einzeln, dadurch zu beeinflussen, daß er je nach Notwendigkeit die Druckfeder in Druckanlage an den Richtdraht (erste stabile Stellung) bringt, oder nicht (zweite stabile Stellung).

### KURZBESCHREIBUNG DER ZEICHNUNGEN

Die Erfindung soll nachfolgend unter Bezugnahme auf in den Zeichnungen dargestellte Ausführungsbeispiele näher erläutert werden. Es zeigt:
- Fig. 1: eine Draufsicht auf ein Bracket gemäß einer ersten Ausführungsform der Erfindung im geöffneten Zustand der Druckfeder;
- Fig. 2: eine Schnittansicht des Bracket von Fig. 1, geschnitten längs der Linie II-II von Fig. 1;
- Fig. 3: eine Draufsicht auf das Bracket von Fig. 1 im geschlossenen Zustand der Druckfeder und mit eingelegtem Richtdraht;
- Fig. 4: eine Schnittansicht des Bracket von Fig. 3, geschnitten längs der Linie IV-IV von Fig. 3;
- Fig. 5: eine Draufsicht auf ein Bracket gemäß einer zweiten Ausführungsform der Erfindung im geöffneten Zustand der Druckfeder;
- Fig. 6: eine Schnittansicht des Bracket von Fig. 5, geschnitten längs der Linie VI-VI von Fig. 5;
- Fig. 7: eine Draufsicht auf das Bracket von Fig. 5 im geschlossenen Zustand der Druckfeder und mit eingelegtem Richtdraht;
- Fig. 8: eine Schnittansicht des Bracket von Fig. 7, geschnitten längs der Linie VIII-VIII von Fig. 7;
- Fig. 9: eine Draufsicht auf ein Bracket gemäß einer dritten Ausführungsform der Erfindung im geöffneten Zustand der Druckfeder;
- Fig. 10: eine Schnittansicht des Bracket von Fig. 9, geschnitten längs der Linie X-X von Fig. 9;
- Fig. 11: eine Draufsicht auf das Bracket von Fig. 9 im geschlossenen Zustand der Druckfeder und mit eingelegtem Richtdraht;
- Fig. 12: eine Schnittansicht des Bracket von Fig. 11, geschnitten längs der Linie XII-XII von Fig. 11;
- Fig. 13: eine Draufsicht auf eine vierte Ausführungsform der Erfindung im geöffneten Zustand der Druckfeder;
- Fig. 14: eine Schnittdarstellung des Bracket von Fig. 13, geschnitten längs der Linie XIV-XIV von Fig. 13;
- Fig. 15: eine Draufsicht auf das Bracket von Fig. 13 in geschlossenem Zustand der Druckfeder;
- Fig. 16: eine Schnittdarstellung des Bracket von Fig. 15, geschnitten längs der Linie XVI-XVI von Fig. 15;
- Fig. 17: eine Draufsicht auf eine fünfte Ausführungsform der Erfindung im geöffneten Zustand der Druckfeder;
- Fig. 18: eine Schnittdarstellung des Bracket von Fig. 17, geschnitten längs der Linie XVIII-XVIII von Fig. 17;
- Fig. 19: eine Draufsicht auf das Bracket von Fig. 17 im geschlossenen Zustand der Druckfeder;
- Fig. 20: eine Schnittdarstellung des Bracket von Fig. 19, geschnitten längs der Linie XX-XX von Fig. 19;
- Fig. 21: eine Draufsicht auf eine sechste Ausführungsform der Erfindung im geöffneten Zustand der Druckfeder;
- Fig. 22: eine Schnittdarstellung des Bracket von Fig. 20, geschnitten längs der Linie XXII-XXII von Fig. 21;
- Fig. 23: eine Draufsicht auf das Bracket von Fig. 21 in geöffnetem Zustand der Druckfeder, und
- Fig. 24: eine Schnittdarstellung des Bracket von Fig. 23, geschnitten längs der Linie XXIV-XXIV von Fig. 23.

### DETAILLIERTE BESCHREIBUNG DER ERFINDUNG

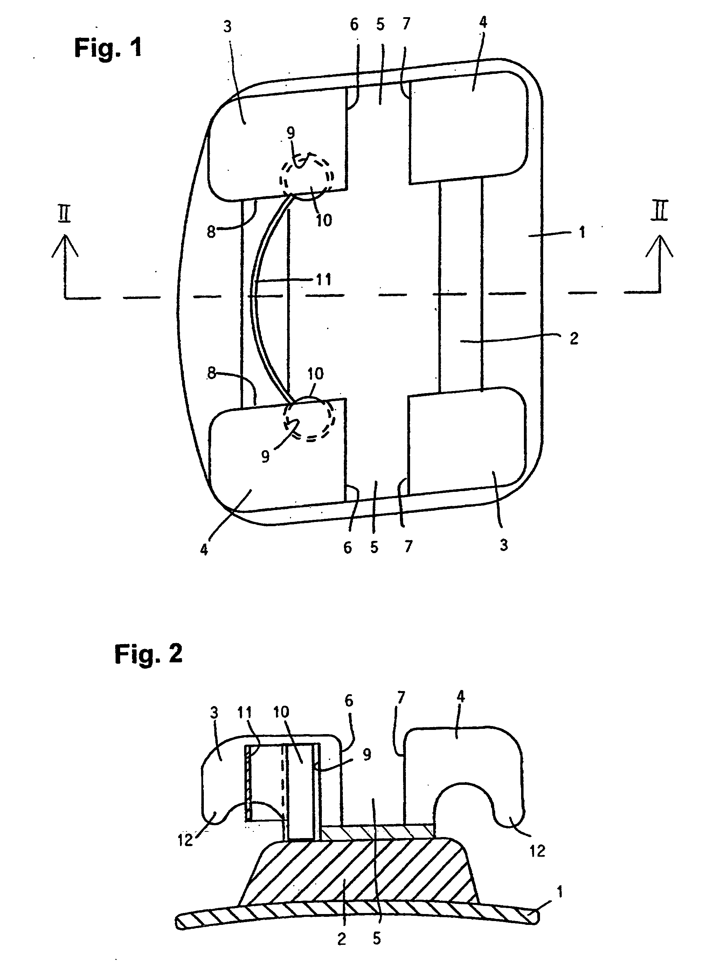

Fig. 1 und 2 zeigen eine erste Ausführungsform eines Bracket von oben. Auf einer Fußplatte 1, die zur Anbringung des Bracket an der Krone eines Zahns bestimmt ist, ist ein Aufbau befestigt, bestehend aus einem Sockel 2 mit zwei davon hochstehenden Flügelpaaren 3 und 4. Die Flügelpaare 3 und 4 sind in gegenseitigem Abstand angeordnet, so daß sie zwischen sich einen Schlitz 5 ausbilden, der hier aus zwei axial hintereinander angeordneten Abschnitten besteht. Im Folgenden wird nur von dem Schlitz gesprochen, gleichgültig ob er in die genannten zwei Abschnitte unterteilt ist, oder nicht. Der Schlitz 5 dient zur Aufnahme eines Richtdrahtes (nicht dargestellt). Jeder Schlitzabschnitt ist beidseitig von Wänden 6 und 7 begrenzt, die die seitlichen Begrenzungen der Flügelpaare 3 und 4 auf den einander zugewandten Seiten bilden.

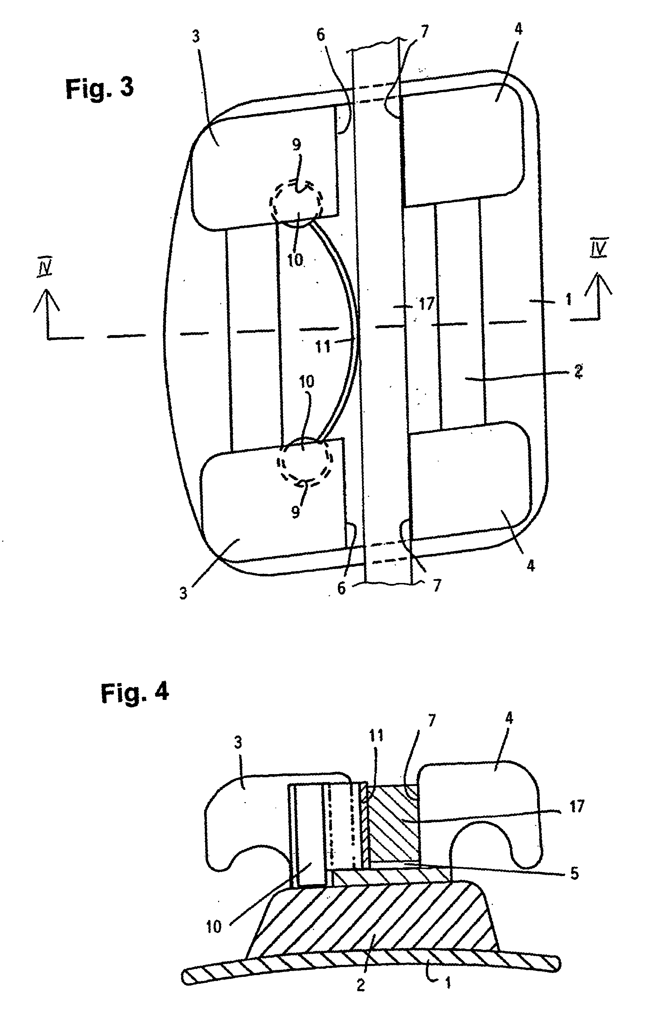

An den beiden Flügeln 3 des ersten Flügelpaares ist an den einander zugewandten Seiten 8 je ein Lager 9 ausgebildet. Die Lager haben somit längs des Schlitzes 5 einen Abstand voneinander. In diesen Lagern 9 sind die Enden 10 einer Blattfeder 11 gehalten, die eine Gesamtlänge aufweist, die größer ist, als der Abstand zwischen den Lagern 9. Auf diese Weise nimmt die in den Lagern 9 montierte Blattfeder 11 die in Fig. 1 gezeigte bogenförmige Gestalt an und hat zwei stabile Zustände, von denen einer der in Fig. 1 gezeigte Zustand ist, der als der geöffnete Zustand bezeichnet wird. In dem anderen stabilen, Zustand, der in Fig. 3 dargestellt ist und mit geschlossen bezeichnet wird, verläuft die Blattfeder 11 spiegelbildlich zum Zustand von Fig. 1, gespiegelt an einer gedachten Ebene, die durch die Lager 9 verläuft.

Die Lager 9 sind in der Ausführungsform nach den Fig. 1 bis 4 Sackbohrungen, die an den einander zugewandten Seitenflächen 8 der Flügel 3 für den Durchtritt der Blattfeder 11 offen sind und von unten, d.h. von der dem Sockel 2 zugewandten Seite her parallel zueinander in die Flügel 3 eingebracht worden sind.

Die Enden 10 der Blattfeder 11 können gerollt oder durch Anschmelzen in eine etwa zylindrische Form gebracht sein, wie in den Fig. 1 und 3 dargestellt ist. Die Blattfeder 11 ist in dieser Ausführungsform von unten in die Lager 9 eingebracht, bevor der Sockel 2 mit den Flügelpaaren verbunden wurde. Die Blattfeder 11 ist auf diese Weise unverlierbar am Bracket gehalten.

Die Fig. 1 und 2 zeigen das Bracket im geöffnetem Zustand der Blattfeder 11. In diesem Zustand kann in den Schlitz 5 ein Richtdraht 17 eingelegt werden, der in den Fig. 1 und 2 nicht dargestellt, jedoch in den Fig. 3 und 4 zu sehen ist. Im Anschluß an das Einlegen des Richtdrahtes 17 in den Schlitz 5 wird die Blattfeder 11 vom Kieferorthopäden mit Hilfe eines kleinen Werkzeugs, beispielsweise einer Nadel, in die andere stabile Stellung gebracht, die in Fig. 3 dargestellt ist und der Schließstellung entspricht, in der die Blattfeder 11 seitlich gegen den Richtdraht 17 drückt, weshalb sie zuvor auch "Druckfeder" genannt wurde, so daß der Richtdraht 17 in definierte Anlage an die Wand 7 des zweiten Flügelpaares 4 gedrückt wird.

Schließlich wird im Gebrauch der Richtdraht in dem Schlitz 5 gesichert, etwa indem bei dem gezeigten Bracket eine Ligatur aus Gummi, Faden oder Draht (nicht dargestellt) um die Flügel 3 und 4 über den Richtdraht 17 hinweg geschlungen wird. Zur Verankerung der Ligatur an den Flügeln 3 und 4 sind diese jeweils mit nach unten vorspringenden Hörnern 12 versehen, siehe Fig. 2, die die Ligatur festhalten. Dieses Merkmal und die Anbringung der Ligatur sind dem Fachmann allgemein bekannt, so daß auf eine zeichnerische Darstellung verzichtet werden kann.

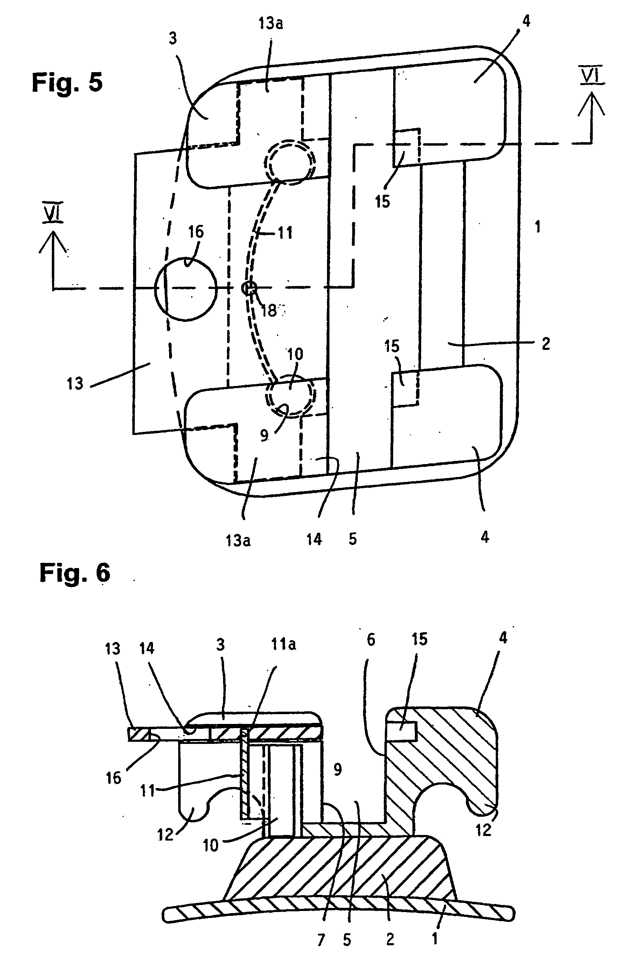

Die Fig. 5 bis 8 zeigen eine zweite Ausführungsform der Erfindung, die sich von der ersten Ausführungsform dadurch unterscheidet, daß das Bracket zusätzlich einen Schieber 13 enthält, der quer zum Schlitz 5 verschoben werden kann. Der Schieber 13 ist in Nuten 14 geführt, die dicht unterhalb der Oberseite in den Flügeln 3 des ersten Flügelpaares in den einander zugewandten Seiten dieser Flügel 3 ausgebildet sind. In den Flügeln 4 des zweiten Flügelpaares sind in Verlängerung der Nuten 14 der Flügel 3 in den einander zugewandten Seiten dieser Flügel 4 kurze Nuten 15 ausgebildet, siehe insbesondere Fig. 6, in die ein Teilabschnitt des Schiebers 13 eintreten kann.

Der Schieber 13 hat seitlich Fahnen 13a, deren Länge so dimensioniert ist, daß in der Schließstellung des Schiebers 13 der Schlitz 5 des Bracket vollständig von dem Schieber 13 überdeckt ist. Der Schieber 13 weist weiterhin ein erstes Loch 16 auf, das für den Eingriff eines Werkzeugs, beispielsweise einer Nadel, bestimmt ist, mit der der Schieber verschoben werden kann.

Die Fig. 5 und 6 zeigen den Schieber 13 und die Blattfeder 11 im geöffneten Zustand, in dem der Schlitz 5 vollständig freigegeben ist. In dem Bereich, der unter der Mitte der Blattfeder 11 liegt, weist der Schieber 13 ein zweites, kleines Loch 18 auf, in das eine an der Blattfeder 11 ausgebildete Fahne 11a eingreift, die die Blattfeder 11 an den Schieber 13 ankoppelt, siehe Fig. 6.

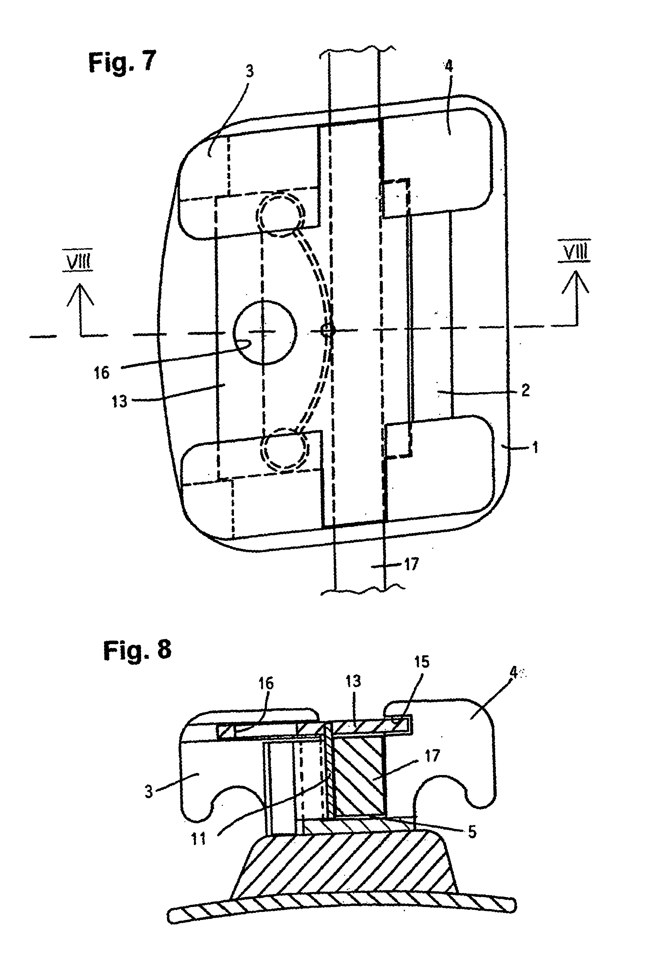

Mit Hilfe der schon erwähnten Nadel, die in das Loch 16 eingeführt wird, kann der Schieber 13 in die in Fig. 7 gezeigte Schließstellung gebracht werden, in der er den Schlitz vollständig überdeckt und einen in den Schlitz 5 eingelegten Richtdraht 17 in dem Schlitz 5 sichert. Der vordere Abschnitt des Schiebers 13 ist dabei in die kurzen Nuten 15 an den Flügeln 4 des zweiten Flügelpaares eingetreten. Durch die Kopplung der Blattfeder 11 an den Schieber 13 ist die Blattfeder 11 in ihre zweite stabile Stellung, die Schließstellung gebracht, wie Fig. 7 zeigt, in der sie zugleich den Schieber 13 sichert.

Der Schieber 13 kann aus Metall bestehen, er muß nicht federnd sein und könnte daher auch aus Keramik bestehen. Die Verwendung des Schiebers 13 macht Ligaturen überflüssig, da der Schieber 13 den Richtdraht im Schlitz 5 gegen ein Herausgleiten sichert.

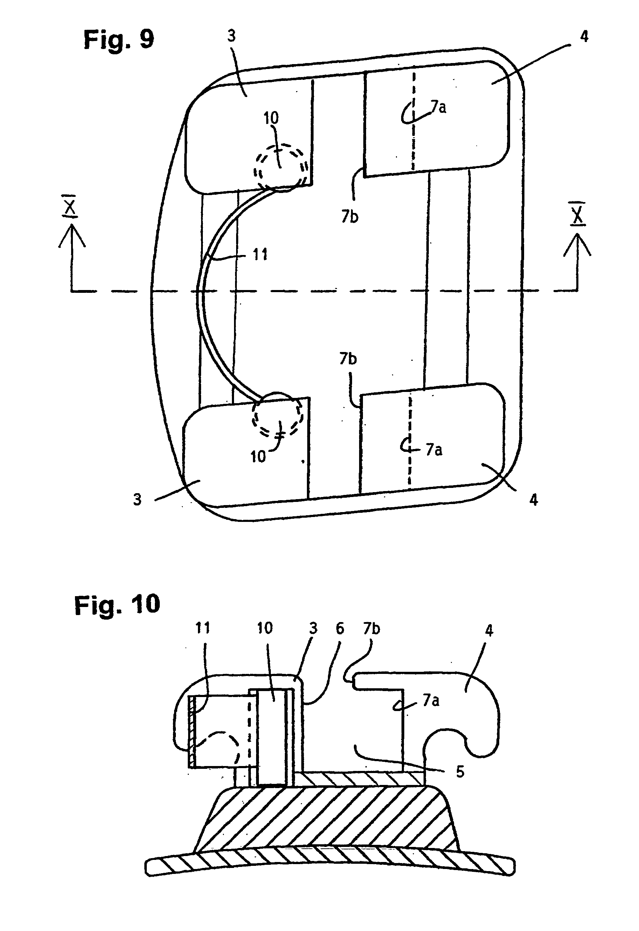

Die Fig. 9 bis 12 zeigen eine dritte Ausführungsform der Erfindung, die der ersten Ausführungsform sehr ähnlich ist. Sie unterscheidet sich von der ersten Ausführungsform dadurch, daß die Flügel 4 des zweiten Flügelpaares auf der der Blattfeder 11 gegenüberliegenden Seitenwand eine Hinterschneidung 7a aufweisen, die nach oben jeweils von einem Vorsprung 7b begrenzt sind.

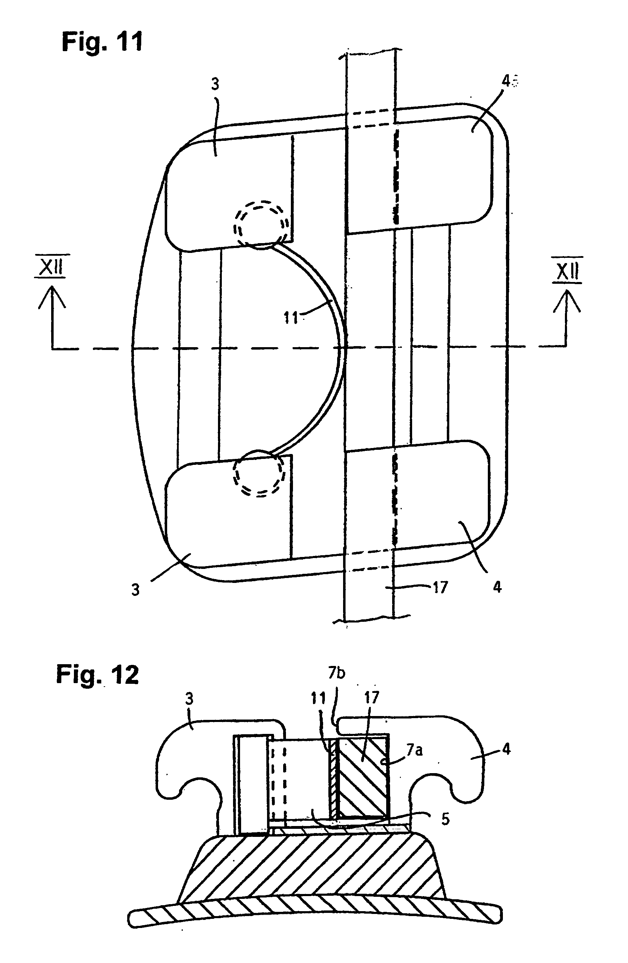

Wie man den Fig. 11 und 12 entnehmen kann, in denen auch ein in das Bracket eingelegter Richtdraht 17 rechteckigen Querschnitts dargestellt ist, wird in der Schließstellung der Blattfeder 11 der Richtdraht 17 unter den Vorsprung 7b in Anlage an die Hinterschneidung 7a gedrückt, so daß er von dem Vorsprung 7b im Zusammenwirken mit der Blattfeder 11 im Schlitz 5 des Bracket festgehalten wird. Bei dieser Ausführungsform kann somit auf Ligaturen oder einen Schieber oder andere Einrichtungen zur Sicherung des Richtdrahtes 17 verzichtet werden.

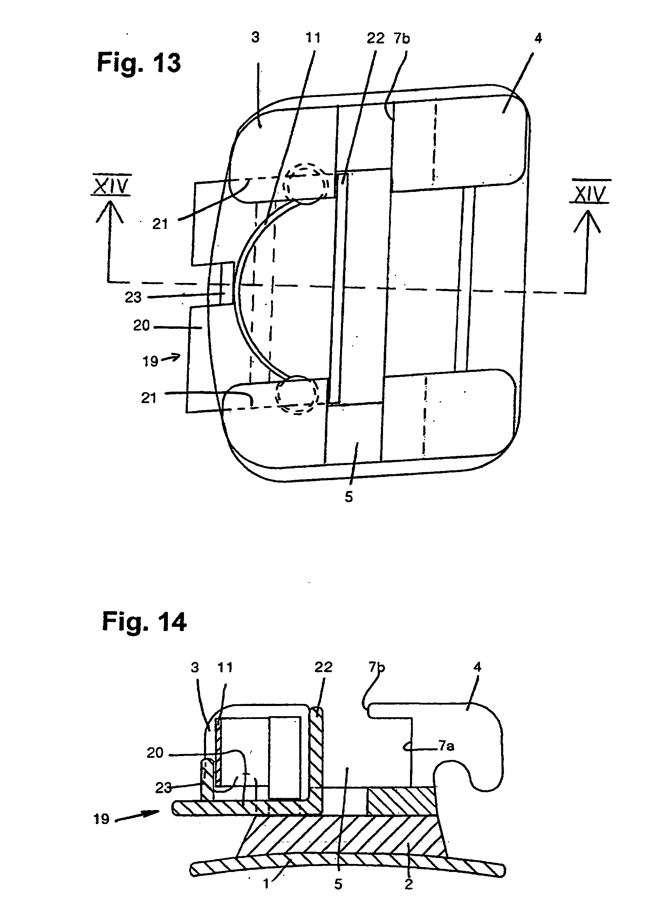

Die Fig. 13 bis 16 zeigen eine aus der Ausführungsform von Fig. 9 bis 12 weiterentwickelte Ausführungsform der Erfindung. Das Bracket unterscheidet sich von dem der Fig. 9 bis 12 dadurch, daß es zusätzlich einen winkelförmigen Schieber 19 aufweist, der sich parallel zum Schlitz 5 erstreckt und eine Länge aufweist, daß er die seitliche Öffnung zwischen des Flügeln der beiden Flügelpaare 3 und 4 überspannt.

Dieser Schieber 19 hat einen L-förmigen Querschnitt. Der eine Schenkel 20 des Schiebers 19 erstreckt sich im wesentlichen parallel zur Grundplatte 1 bzw. dem Boden des Schlitzes 5 und ist verschiebbar in Nuten 21 geführt, die in den Flügeln 3 des ersten Flügelpaares an den einander zugewandten seiten derselben ausgebildet sind. Der andere Schenkel 22 erstreckt sich senkrecht dazu, d.h. parallel zu den Schlitzwänden 6, 7, und ist dazu bestimmt, von der Blattfeder 11 in deren Schließstellung beaufschlagt und dadurch in Richtung auf das andere Flügelpaar 4 gedrückt zu werden, so daß ein in den Schlitz 5 eingelegter Richtdraht (nicht dargestellt) von diesem Schieberschenkel 22 beaufschlagt wird.

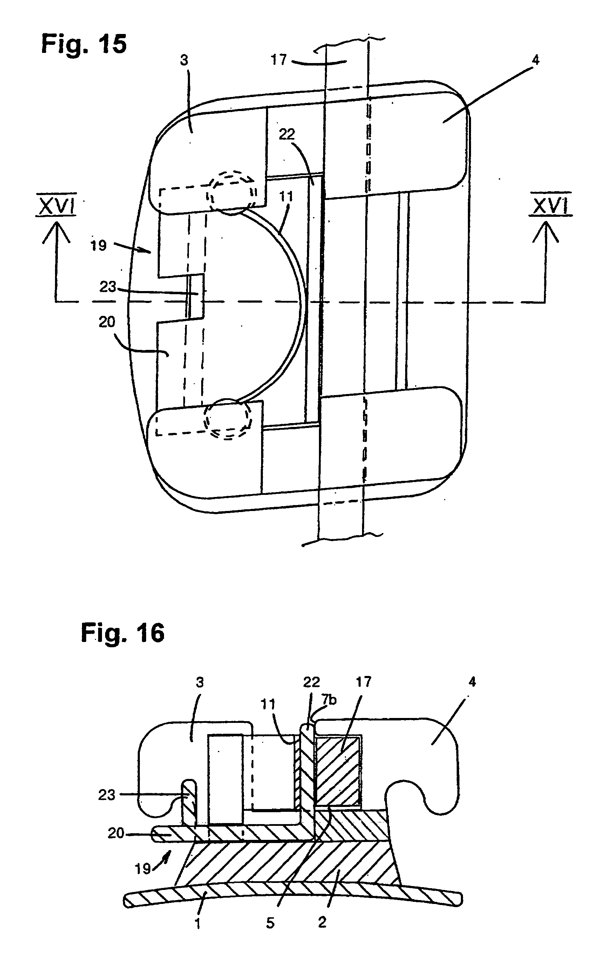

Der erstgenannte Schenkel 20 weist eine nach oben gebogene, aus dem Schenkel ausgeklinkte Nase 23 im Bereich der Mitte seines dem Schlitz 5 fernen Randes auf. Diese Nase 23 dient dazu, von einem Werkzeug (nicht dargestellt) ergriffen zu werden, um den Schieber 19 zu bewegen. Sie ist weiterhin dazu geeignet, in der Öffnungsstellung der Blattfeder 11 von dieser beaufschlagt zu werden (siehe Fig. 15), um den Schieber 19 in seiner Öffnungsstellung zu halten, in der der Schlitz 5 zur Aufnahme eines Richtdrahtes bereit ist, vergleichbar der Ausführungsform nach den Fig. 5 bis 8.

Der Schieber 19 besteht aus einem ziemlich steifen Material. Aufgrund seiner Länge ist der Schieber 19 in der Lage, die nur örtlich von der Blattfeder 11 in deren Schließstellung einwirkende Kraft auf seinen gesamten Schenkel 22 und somit auf einen relativ großen Längenabschnitt des im Schlitz 5 befindlichen Richtdrahtes 17 (siehe Fig. 16) zu verteilen, wodurch zusätzlich das Spiel verringert wird, das noch immer zwischen dem Richtdraht und der Seitenwand 7a des zweiten Flügelpaares 4 vorhanden sein kann. Weiterhin hilft der Schenkel 20 des Schiebers 19 aufgrund seiner Länge zusätzlich bei der Sicherung des Richtdrahtes in seiner Lage unter den Vorsprüngen 7b der Hinterschneidung gegen unbeabsichtigtes Herausgleiten.

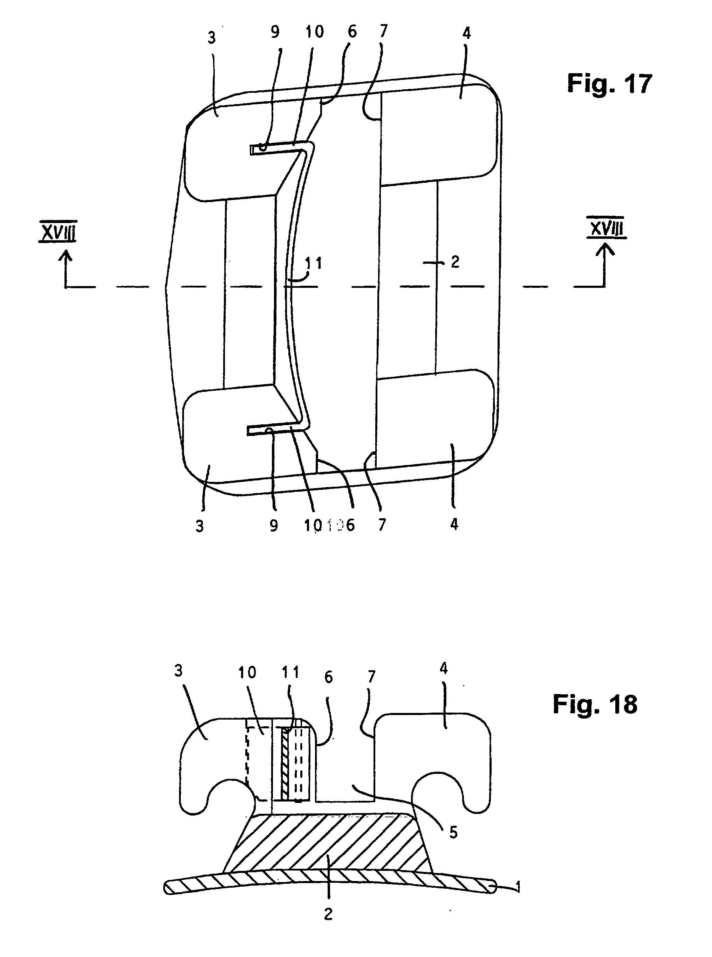

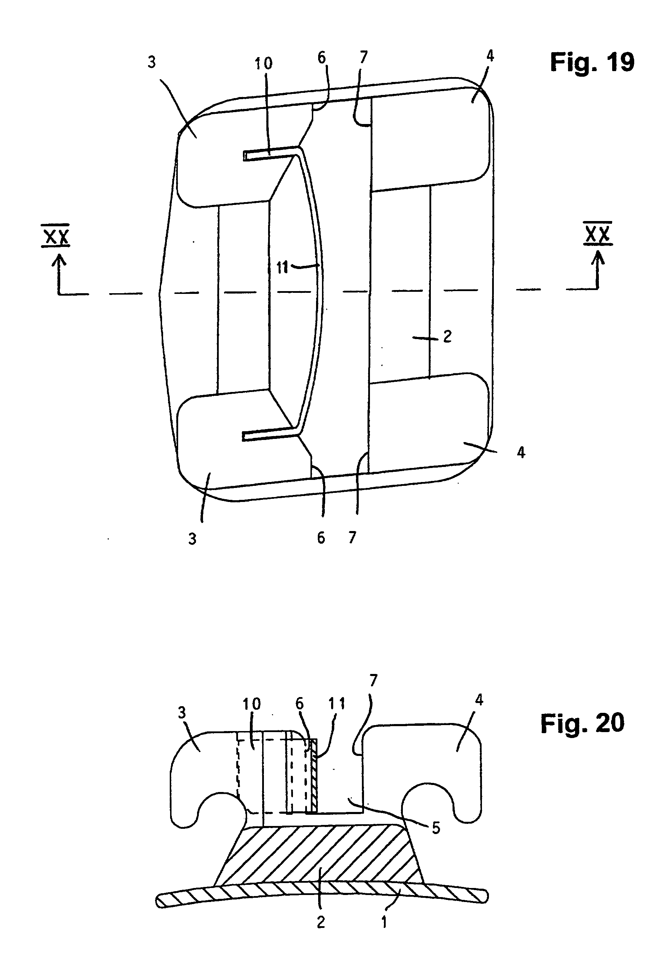

Die Fig. 17 bis 24 zeigen fünfte und sechste Ausführungsformen der Erfindung, die Modifikationen der Ausführungsform nach den Fig. 1 bis 4 sind. Daher wird zur Vermeidung von Wiederholungen zunächst auf die Beschreibung zu den Fig. 1 bis 4 verwiesen. Die Elemente der Fig. 17 bis 24, die denen der Fig. 1 bis 4 entsprechen, sind mit übereinstimmenden Bezugszeichen versehen.

Die fünfte Ausführungsform der Fig. 17 bis 29 unterscheidet sich von der ersten Ausführungsform der Fig. 1 bis 4 dadurch, daß die Enden 10 der Blattfeder 11 nicht eingerollt, sondern etwa rechtwinkelig zur Längserstreckung der Blattfeder 11 gebogen sind. Die Aufnahmen am Bracketaufbau, in denen diese Enden 10 sitzen, sind als Spalte 9 ausgebildet, die sich in der Seitenwand 6 des Schlitzes 5 senkrecht zur Längserstreckung des Schlitzes 5 erstrecken. Die Distanz zwischen den Spalten 9 ist kleiner als die Distanz zwischen den umgebogenen Enden 10 der Blattfeder 11 um unmontierten Zustand derselben, so daß bei Montage der Blattfeder 11 am Bracketaufbau die Blattfeder 11 die in Fig. 17 gezeigte bogenförmige Gestalt annimmt und zwei stabile Zustände hat, von denen der in Fig. 17 die Öffnungsstellung zeigt und der in Fig. 18 die Schließstellung zeigt.

Das Material der Flügel 3 und 4, das die Spalte 9 begrenzt, ist zweckmäßigerweise verstemmt, um die Federenden 10 in den Spalten 9 dauerhaft festzuklemmen.

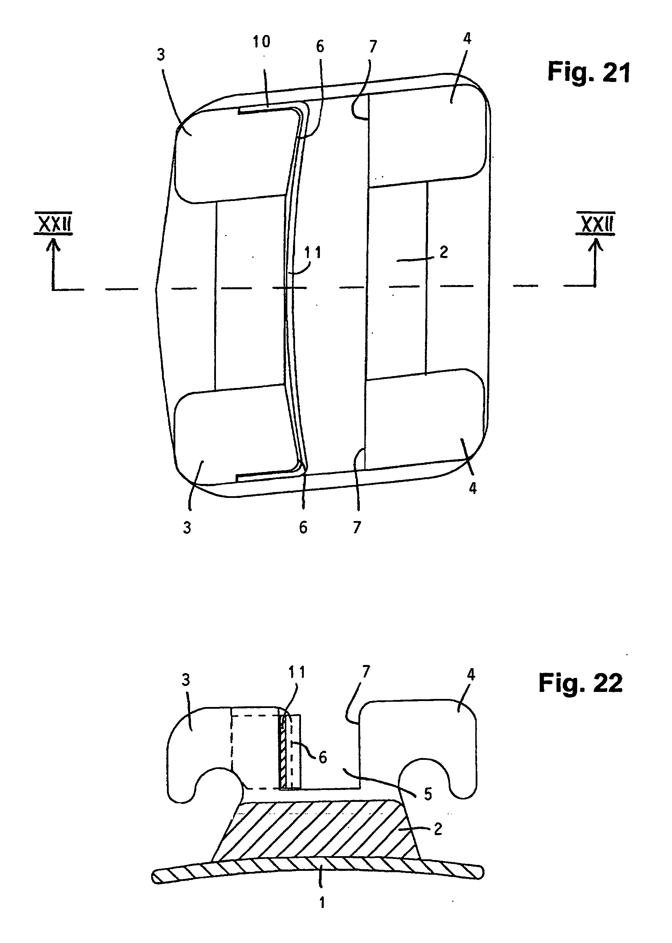

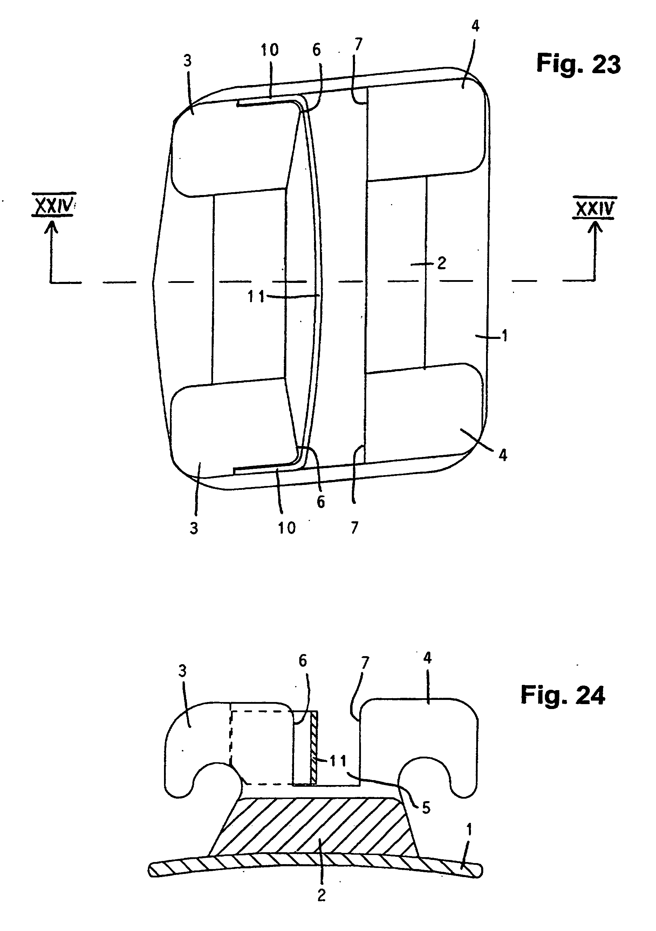

Die sechste Ausführungsform der Fig. 21 bis 24 unterscheidet sich von der ersten Ausführungsform dadurch, daß die Enden 10 der Blattfeder 11 in einer zur Längserstreckung der Blattfeder senkrechten Richtung umgebogen sind, wie bei der fünften Ausführungsform. Diese Enden 10 sind, vorzugsweise durch Verschweissung, an den Endseiten der Flügel 3 und 4, wo der Schlitz 5 endet, befestigt, so daß sich die Blattfeder über die gesamte Länge des Schlitzes 5 erstreckt. Es versteht sich wiederum, daß die Länger der Blattfeder 11 zwischen ihrem umgebogenen Enden 10 im unmontierten Zustand größer ist als die Distanz zwischen den genannten Endflächen der Flügel 3 und 4, so daß nach Montage der Blattfeder 11 diese die schon diskutierte bogenförmige Gestalt mit zwei möglichen stabilen Stellungen einnimmt, von denen die offene Stellung in Fig. 21 und die geschlossene Stellung in Fig. 23 gezeigt ist.

In den Fig. 17 bis 24 ist der Richtdraht nicht dargestellt, da er zur Erläuterung dieser Ausführungsformen der Erfindung nicht erforderlich ist.

Bei den Ausführungsformen der Fig. 17 bis 24 ist die Seitenwand 6 des Schlitzes 5, wo die Blattfeder 11 befestigt ist, von den Enden des Schlitzes 5 ausgehend keilförmig oder bogenförmig zurückgesetzt, um die ungehinderte Ausbildung des Bogens durch die Blattfeder 11 in der Öffnungsstellung derselben zu ermöglichen.

Der Vorteil der fünften und sechsten Ausführungsformen gegenüber der ersten Ausführungsform besteht darin, daß bei gegebener Länge des Schlitzes 5 die Blattfeder 11 länger ausgebildet ist, so daß deren Handhabung bei der Herstellung und Montage einfacher ist.

Es ist ferner anzumerken, daß das Bracket mit einer Federkonstruktion der fünften oder sechsten Ausführungsform auch mit einer Hinterschneidung an den Flügeln nach Art der Ausführungsform der Fig. 9 bis 12 versehen sein kann, um den Richtdraht ohne Ligaturen in dem Schlitz 5 zu sichern. Schließlich ist hervorzuheben, daß ein Bracket mit einer Federkonstruktion nach der fünften oder sechsten Ausführungsform auch mit einem Schieber nach einer der unter Bezugnahme auf die Fig. 5 bis 8 oder 13 bis 16 erläuterten Konstruktionen versehen sein kann. Zur Vermeidung von Wiederholungen wird auf die Erläuterung zu jenen Figuren verweisen.

## Patentansprüche

1. Kieferorthopädisches Bracket mit einer Grundplatte (1) zur Befestigung an der Krone eines Zahns und einem auf der Oberseite der Grundplatte (1) befestigten, sich über die Grundplatte (1) erhebenden Aufbau (2,3,4), der wenigstens einen nach oben offenen Schlitz (5) aufweist, der von einer Bodenwand und Seitenwänden (6,7) begrenzt ist und zur Aufnahme eines Richtdrahtes (17) bestimmt ist, und mit einer Blattfeder (11), die einen Bogen ausbildet, dessen Enden (10) am Bracket an zwei längs des Schlitzes (5) beabstandeten Stellen eingespannt sind und dessen von ihm beschriebene Ebene parallel zum Boden des Schlitzes (5) verläuft, und die dazu eingerichtet ist, als Druckfeder eine in Richtung auf eine (7) der den Schlitz (5) begrenzenden Seitenwände wirkende Kraft an einem in den Schlitz (5) eingelegten Richtdraht (17) hervorzubringen.

2. Bracket nach Anspruch 1, **dadurch gekennzeichnet, daß** die Enden (10) der Blattfeder (11) jeweils in Vertiefungen (9) aufgenommen sind.

3. Bracket nach Anspruch 2, **dadurch gekennzeichnet, daß** die Vertiefungen seitlich offene Bohrungen (9) sind, die sich von der gegen die Grundplatte (1) gerichteten Seite des Aufbaus (2,3,4) ausgehend nach oben erstrecken.

4. Bracket nach Anspruch 3, **dadurch gekennzeichnet, daß** die Bohrungen (9) Sackbohrungen sind, die jeweils an ihrem oberen Ende geschlossen sind.

5. Bracket nach einem der Ansprüche 3 und 4, **dadurch gekennzeichnet, daß** die Blattfeder (11) an ihren Enden durch Einrollen oder Aufschmelzen hergestellte Verdickungen (10) aufweist, die in den Bohrungen (9) aufgenommen sind.

6. Bracket nach Anspruch 2, **dadurch gekennzeichnet, daß** die Vertiefungen als Spalte (9) ausgebildet sind, die in einer Seitenwand (6) des Schlitzes (5) ausgebildet sind und sich quer zu dem Schlitz (5) erstrecken, und daß die Enden (10) der Blattfeder (11) im wesentlichen quer zur Längsrichtung der Blattfeder (11) abgewinkelt sind.

7. Bracket nach Anspruch 6, **dadurch gekennzeichnet, daß** die Enden (10) der Blattfeder (11) in den Spalten (9) durch Verstemmen des die Spalte begrenzenden Materials festgehalten sind.

8. Bracket nach Anspruch 1, **dadurch gekennzeichnet, daß** die Enden (10) der Blattfeder (11) an dem Aufbau (2,3,4) des Bracket an Stellen befestigt sind, an denen der Schlitz (5) endet.

9. Bracket nach Anspruch 8, **dadurch gekennzeichnet, daß** die Enden (10) der Blattfeder (11) außen an den Endabschnitten des Aufbaus (2,3,4) angeschweißt sind.

10. Bracket nach einem der vorhergehenden Ansprüche, daß der Aufbau (2,3,4) des Bracket zu beiden Seiten des Schlitzes einen Durchbruch aufweist, so daß der Aufbau zwei Flügelpaare (3,4) ausbildet, die den Schlitz (5) seitlich begrenzen, und die Blattfeder (11) zwischen den Flügeln (3) des einen Flügelpaare eingespannt ist.

11. Bracket nach einem der vorhergehenden Ansprüche, **dadurch gekennzeichnet, daß** an dem Bracket ein Schieber (13) quer zum Schlitz (5) verschiebbar gelagert ist, der in eine den Schlitz (5) überdeckende Stellung schiebbar und mit der Blattfeder (11) mechanisch gekoppelt ist.

12. Bracket nach einem der Ansprüche 1 bis 10, **dadurch gekennzeichnet, daß** an dem Bracket ein winkelförmiger Schieber (19) quer zum Schlitz (5) verschiebbar geführt ist, der einen sich parallel zum Boden des Schlitzes (5) verlaufenden Schenkel (20) und einen sich parallel zu den Seitenwänden (6,7) des Schlitzes (5) erstreckenden Schenkel (22) aufweist, der von der Blattfeder (11) in deren Schließstellung druckbeaufschlagt ist.

13. Bracket nach Anspruch 12, **dadurch gekennzeichnet, daß** der sich parallel zum Boden des Schlitzes (5) erstreckende Schenkel (20) des Schiebers (19) eine Nase aufweist, an der sich die Blattfeder (11) in ihrer Öffnungsstellung anlegt.

14. Bracket nach einem der vorhergehenden Ansprüche, **dadurch gekennzeichnet, daß** die der Blattfeder (11) gegenüberliegende Seite (7) des Aufbaus (2,3,4) eine Hinterschneidung (7a) aufweist, die nach oben durch einen Vorsprung (7b) begrenzt ist, der zum Festhalten eines in den Schlitz (5) eingelegten Richtdrahtes (17) geeignet ist.

## Claims

1. Orthodontic bracket, comprising a base plate (1) for attachment to the crown of a tooth, and a structure (2, 3, 4) secured to the upper side of the base plate (1) and raising over the base plate (1), said structure (2, 3, 4) comprising at least one slot (5) open toward the top of the bracket and limited by a bottom wall and side walls (6, 7) and adapted to receive an archwire (17), and a leaf spring (11) forming an arc the ends (10) of which are supported at the bracket at two locations spaced along said slot (5), said arc defining a plane extending in parallel to the bottom of said slot (5) and being adapted as a pressure spring to impose a force onto an archwire (17) inserted in said slot (5) into the direction of one (7) of said side walls limiting said slot (5).

2. Bracket according to claim 1, **characterised in that** the ends (10) of said leaf spring (11) are each received in a recess (9) .

3. Bracket according to claim 2, **characterised in that** the recesses are laterally open bores (9) extending upwards from the side of the structure (2, 3, 4) directed toward the base plate (1).

4. Bracket according to claim 3, **characterised in that** the bores (9) are pocket bores, each of which being closed at its upper end.

5. Bracket according to one of claims 3 and 4, **characterised in that** the leaf spring (11) has enlargements (10) formed at the leaf spring's ends by rolling or fusing, said enlargements (10) being accommodated in said bores (9).

6. Bracket according to claim 2, **characterised in that** the recesses are formed as gaps (9) formed in a side wall (6) of the slot (5) and extending transversely to said slot (5), and that the ends (10) of the leaf spring (11) are angled essentially transversely to the longitudinal extension of said leaf spring (11).

7. Bracket according to claim 6, **characterised in that** the ends (10) of said leaf spring (11) are secured in said gaps (9) by caulking the material limiting said gaps.

8. Bracket according to claim 1, **characterised in that** the ends (10) of said leaf spring (11) are secured to the structure (2, 3, 4) of said bracket at locations where said slot (5) ends.

9. Bracket according to claim 8, **characterised in that** the ends (10) of said leaf spring (11) are welded to the end portions of said structure (2, 3, 4) at the outside thereof.

10. Bracket according to one of the preceding claims, **characterised in that** the structure (2, 3, 4) of the bracket has an opening at both sides of the slot (5), so that the structure forms two pairs of wings (3, 4) which laterally limit the slot (5), and the leaf spring (11) is clamped between the wings (3) of one of said pair of wings.

11. Bracket according to one of the preceding claims, **characterised in that** a slider (13) is supported at the bracket so as to be displaceable transversely to said slot (5), said slider (13) being displaceable into a position to cover said slot (5) and being mechanically coupled to said leaf spring (11).

12. Bracket according to one of claims 1 to 10, **characterised in that** an angled slider (19) is supported at the bracket so as to be displaceable transversely to said slot (5), said slider (19) having a leg (20) extending in parallel to the bottom of said slot (5) and a leg (22) extending in parallel to the side walls (6, 7) of said slot (5), said slider (19) being biased by said leaf spring (11) in the closing position of said leaf spring (11).

13. Bracket according to claim 12, **characterised in that** the leg (20) of said slider (19) extending in parallel to the bottom of said slot (5) comprises a lug which is engaged by said leaf spring (11) in the opening position thereof.

14. Bracket according to one of the preceding claims, **characterised in that** the structure's (2, 3, 4) side (7) opposite said leaf spring (11) comprises an undercut (7a) limited towards the top by a projection (7b) which is adapted to retain an archwire (17) inserted in said slot (5).

## Revendications

1. Bracket orthodontique comprenant une plaque de base (1) pour la fixation sur la couronne d'une dent et un montage (2, 3, 4) fixé sur le côté supérieur de la plaque de base (1) en élévation au-dessus de la plaque de base (1) et qui présente au moins une fente (5) ouverte vers le haut, qui est délimitée par une paroi de fond et par des parois latérales (6, 7) et est destinée à recevoir un fil redresseur (17), et comprenant un ressort à lame (11) qui forme un arc dont les extrémités (10) s'appuient sur le bracket en deux points distants le long de la fente (5) et dont le plan qu'il décrit s'étend parallèlement au fond de la fente (5), et qui est agencé pour produire, en tant que ressort de compression, une force agissant en direction de l'une (7) des parois latérales délimitant la fente (5) sur un fil redresseur (17) inséré dans la fente (5).

2. Bracket suivant la revendication 1, **caractérisé en ce que** les extrémités (10) du ressort à lame (11) sont respectivement logées dans des cavités (9).

3. Bracket suivant la revendication 2, **caractérisé en ce que** les cavités sont des trous (9) ouverts latéralement, qui s'étendent vers le haut à partir du côté du montage (2, 3, 4) dirigé vers la plaque de base (1).

4. Bracket suivant la revendication 3, **caractérisé en ce que** les trous (9) sont des trous borgnes qui sont fermés chacun à son extrémité supérieure.

5. Bracket suivant l'une des revendications 3 et 4, **caractérisé en ce que** le ressort à lame (11) présente à ses extrémités des épaississements (10) produits par enroulement ou par fusion, qui sont logés dans les trous (9).

6. Bracket suivant la revendication 2, **caractérisé en ce que** les cavités sont réalisés sous forme d'interstices (9), qui sont réalisés dans une paroi latérale (6) de la fente (5) et s'étendent transversalement à la fente (5), et que les extrémités (10) du ressort à lame (11) sont coudées essentiellement transversalement à la direction longitudinale du ressort (11).

7. Bracket suivant la revendication 6, **caractérisé en ce que** les extrémités (10) du ressort à lame (11) sont maintenues dans les interstices (9) par rabattement du matériau délimitant les interstices.

8. Bracket suivant la revendication 1, **caractérisé en ce que** les extrémités (10) du ressort à lame (11) sont fixées sur le montage (2, 3, 4) du bracket en des points où s'achève la fente (5).

9. Bracket suivant la revendication 8, **caractérisé en ce que** les extrémités (10) du ressort à lame (11) sont soudées extérieurement sur les sections d'extrémités du montage (2, 3, 4).

10. Bracket suivant l'une des revendications précédentes, **caractérisé en ce que** le montage (2, 3, 4) du bracket présente une percée de part et d'autre de la fente, de sorte que le montage forme deux paires d'ailettes (3, 4) qui délimitent latéralement la fente (5), et que le ressort à lame (11) est serré entre les ailettes (3) de l'une des paires d'ailettes.

11. Bracket suivant l'une des revendications précédentes, **caractérisé en ce que** sur le bracket est monté, avec possibilité de déplacement transversal à la fente (5), un curseur (13) qui peut être déplacé dans une position recouvrant la fente (5) et être couplé mécaniquement au ressort à lame (11).

12. Bracket suivant l'une des revendications 1 à 10, **caractérisé en ce que** sur le bracket est guidé en translation transversalement à la fente (5) un curseur angulaire (19), qui présente une branche (20) s'étendant parallèlement au fond de la fente (5) et une branche (22) s'étendant parallèlement aux parois latérales (6, 7) de la fente (5), qui est sollicitée en pression dans sa position de fermeture par le ressort à lame (11).

13. Bracket suivant la revendication 12, **caractérisé en ce que** la branche (20) du curseur (19), s'étendant parallèlement au fond de la fente (5) présente un taquet sur lequel s'applique le ressort à lame (11) dans sa position d'ouverture.

14. Bracket suivant l'une des revendications précédentes, **caractérisé en ce que** le côté (7) du montage (2, 3, 4), en vis-à-vis du ressort à lame (11) présente une contre-dépouillé (7a) qui est délimitée vers le haut par une saillie (7b) qui est propre à maintenir un fil redresseur (17) inséré dans la fente (5).
